# EUROPÄISCHE PATENTSCHRIFT

(11) **EP 1 174 446 B1**
(45) Veröffentlichungstag und Bekanntmachung des Hinweises auf die Patenterteilung: **24.07.2002**
(21) Anmeldenummer: 01114703.0
(22) Anmeldetag: 21.06.2001
(51) Int. Cl.: C08F 218/04, C08F 263/04

(54) **Verfahren zur Herstellung von Polymerdispersionen mit hohem Feststoffgehalt**
Process for preparing polymer dispersions having a high solid content
Procédé de préparation de dispersions de polymères à taux en matières solides élevées

(30) Priorität: 21.07.2000 DE 10035589
(43) Veröffentlichungstag der Anmeldung: 23.01.2002
(73) Patentinhaber: Wacker Polymer Systems GmbH & Co. KG, 84489 Burghausen (DE)
(72) Erfinder: Weitzel, Hans-Peter Dr., 84571 Reischach (DE)
(74) Vertreter: Schuderer, Michael, Dr.

(56) Entgegenhaltungen:
- EP-A- 0 889 068
- EP-A- 0 924 229

## Beschreibung

Die Erfindung betrifft ein Verfahren zur Herstellung von wässrigen Polymerdispersionen auf der Basis von Vinylestern, Ethylen und gegebenenfalls weiteren Comonomeren mit einem Feststoffgehalt von > 65 % und einer Viskosität < 10000 mPas, sowie deren Verwendung.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate, zum Beispiel als zementäre Fliesenkleber, für Holzleime oder Fußbodenkleber, eingesetzt. Als Schutzkolloide werden vielfach Polyvinylalkohole verwendet. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (beispielsweise Haftzugswerte im Fliesenkleber) beiträgt. Ausserdem ist es unter ökologischen Gesichtspunkten wünschenswert auf niedermolekulare Tenside, insbesondere Alkylphenolethoxylate, zu verzichten und ausschließlich mit Schutzkolloiden zu stabilisieren.

Ein hoher Feststoffgehalt ist aus einer Reihe von Gründen wünschenswert. Er bietet logistische Vorteile weil weniger Wasser transportiert werden muß und er bietet technische Vorteile, wie schnelleres Trocknen der Kleber. Zur Herstellung von hochfeststoffhaltigen Dispersionen sind eine Reihe von Patentschriften bekannt. Der übliche Ansatz ist durch spezielle Polymerisationstechniken eine mindestens bimodale oder polymodale Teilchengrößenverteilung zu erzeugen. Die beanspruchten Produkte sind überwiegend emulgatorstabilisiert oder durch Emulgator und Polyvinylalkohol stabilisiert. Emulgatorfreie Dispersionen mit sehr hohem Feststoffgehalt sind bisher nicht zugänglich.

Gegenstand der US-A 5426146 ist ein Verfahren zur Herstellung von hoch feststoffhaltigen Dispersionen, bei dem die Polymerisation in Gegenwart eines Saatlatex gestartet wird, der aus einem Gemisch von mindestens zwei oder mehreren Dispersionen besteht, welche relativ kleine Teilchen mit einer Partikelgröße von 20 bis 100 nm enthalten. Mit diesem Verfahren werden Dispersionen mit spezieller Teilchengrößenverteilung erhalten, welche bessere Fließeigenschaften zeigen. Es handelt sich dabei um ein relativ kompliziertes Verfahren, bei dem spezifische Bedingungen bezüglich der Massendichte, des spezifischen Volumens und des Partikeldurchmessers einzuhalten sind.

Die EP-A 614922 (US-A 5430092) beschreibt ein Verfahren zur Herstellung von wässrigen Polymerdispersionen mit hohem Festgehalt aber gutem Fließverhalten, in Gegenwart eines Saatlatex mit Teilchengröße 90 nm bis 500 nm, der vollständig vorgelegt werden muß. Die Polymerisation erfolgt in einem mehrstufigen Zulaufverfahren, bei dem zu Beginn eine definierte Teilmenge der Monomeren polymerisiert wird, und anschließend ein definierter Polymerumsatz eingehalten werden muß. Nachteilig ist ebenfalls die sehr komplexe Fahrweise.

Die DE-A 4213968 (US-A 5340859) beschreibt eine Vorgehensweise zur Herstellung von hoch feststoffhaltigen Dispersionen in Gegenwart von zwei Saatlatices, von denen der eine große (> 300 nm) und kleinere (< 50 nm) Partikel aufweist und nur dosiert werden darf, während der zweite Saatlatex komplett vorgelegt wird. Weiter sind bestimmte Parameter bezüglich Umsatz und Molzahl der Saatlatexteilchen einzuhalten. Nachteilig ist auch hier die sehr komplizierte Vorgehensweise.

Die EP-A 814103 (US-A 6028135) betrifft eine Verfahrensweise zur Herstellung von wässrigen Polymerdispersionen mit hohem Festgehalt, bei dem insbesondere die Stippenbildung während der Polymerisation vermieden werden sollte. Gelöst wird dies dadurch, daß man die Hauptmenge der zu polymerisierenden Monomere im Saatlatex voremulgiert der Polymerisation zuführt.

Die DE-A 19642762 betrifft ein Verfahren zur Herstellung von Polymerdispersionen mit hohem Festgehalt, bei dem zur Vermeidung von Stippenbildung in Gegenwart von funktionellen Comonomeren copolymerisiert wird, und während der Polymerisation der pH-Wert des Polymerisationsansatzes geändert wird, wobei zunächst bei pH-Bedingungen polymerisiert wird, bei denen die funktionellen Gruppen neutralisiert vorliegen, und anschließend der pH-Wert so geändert wird, daß die funktionellen Gruppen in geladene Gruppen übergeführt werden.

Die DE-A 19645427 betrifft ebenfalls ein Verfahren zur Herstellung von Polymerdispersionen mit hohem Feststoffgehalt, bei dem in Gegenwart von funktionellen Comonomeren polymerisiert wird, wobei ein zweistufiges Zulaufverfahren gewählt wird, bei dem in der ersten Stufe die Zulaufrate kontinuierlich erhöht wird, und in der zweiten Stufe bei konstanter Zulaufrate polymerisiert wird. Saatllatex wird hier keiner eingesetzt.

In der EP-A 889068 wird ein Verfahren zur Herstellung von Vinylacetat-Ethylen-Dispersionen mit hohem Festgehalt beschrieben, bei dem Vinylacetat teilweise vorgelegt und teilweise zudosiert wird, und in Gegenwart eines Gemisches aus Polyvinylalkohol und nichtionischem Emulgator polymerisiert wird.

In der EP-A 814096 (US-A 6028135) wird ein Verfahren zur Herstellung von Dispersionen mit einem Feststoffgehalt von mindestens 70 % beschrieben. Zur Vermeidung von Mikrokoagulaten wird während der Emulsionspolymerisation ein mit Wasser mischbares organisches Lösungsmittel eingesetzt. Die Stabilisierung erfolgt mit Emulgator.

In der EP-A 785970 werden Dispersionen mit einem Feststoffgehalt von mindestens 77 % beschrieben. Die Teilchengrößenverteilung ist mindestens bimodal. Die Polymerisation erfolgt in Gegenwart eines Saatlatex, der in die Vorlage gegeben wird. Die Stabilisierung erfolgt wiederum mit Emulgator und gegebenenfalls Polyvinylalkohol.

In der US-A 6001916 wird ein Verfahren zur Herstellung von Vinylacetat-Ethylen-Dispersionen mit einem Feststoffgehalt von mindestens 65 % beschrieben. Die Polymerisation erfolgt vorzugsweise unter Verwendung von Polyvinylalkohol in Kombination mit nichtionischem Emulgator als Dispergiermittel. Bei der dort beschriebenen Verfahrensweise wird der Saatlatex insgesamt vorgelegt.

In US-A 5936020 wird ein Verfahren zur Herstellung von Vinylacetat-Ethylen-Copolymerdispersionen mit einem Feststoffgehalt von mindestens 65 % beschrieben. Die Polymerisation erfolgt in Gegenwart einer Dispergiermittelkombination aus Polyvinylalkohol, nichtionischem Emulgator und dem Salz einer Polysäure.

Die EP-A 928798 betrifft die Herstellung von wässrigen Dispersionen von Vinylacetat-Ethylen-Copolymeren mit einem Feststoffgehalt von mindestens 65 %. Die Dispersionen werden mittels eines speziellen Emulgatorsystems aus Polyvinylalkohol und nichtionischem Emulgator stabilisiert.

Der Erfindung lag die Aufgabe zugrunde, eine stabile Polymerdispersion auf Basis von Vinylestern, Ethylen und gegebenenfalls weiteren Comonomeren zur Verfügung zu stellen, die einen Feststoffgehalt von > 65 % und eine Viskosität nach Brookfield < 10.000 mPas besitzt und mittels Polyvinylalkohol stabilisiert ist.

Gegenstand der Erfindung ist ein Verfahren zur Herstellung von Copolymerisaten auf Basis von Vinylestern und Ethylen, sowie gegebenenfalls weiteren Comonomeren, in Form deren wässrigen Dispersionen, mit einem Feststoffgehalt > 65 % und einer Viskosität nach Brookfield (20 U) von < 10000 mPas, mittels radikalisch initiierter Polymerisation von einem oder mehreren Monomeren aus der Gruppe der Vinylester und Ethylen und gegebenenfalls weiteren damit copolymerisierbaren Monomeren, in Gegenwart von einem oder mehreren Schutzkolloiden, wobei die Polymerisation in Gegenwart von 2 bis 15 Gew.-% Saatlatex, bezogen auf die Vinylestermenge, durchgeführt wird,
dadurch gekennzeichnet, daß
a) ohne Zusatz von Emulgator und in Gegenwart von einem oder mehreren Schutzkolloiden aus der Gruppe der Polyvinylalkohole mit einem Hydrolysegrad von 80 bis 95 Mol-% und einer Höppler-Viskosität in 4 %-iger wässriger Lösung von 3 bis 30 mPas polymerisiert wird, und
b) der Saatlatex in einem Anteil von 30 bis 75 Gew.-% vor Beginn der Polymerisation vorgelegt wird und der Rest während der Polymerisation zudosiert wird, wobei der Saatlatex eine mittlere Teilchengröße (Gewichtsmittel Dw) von 200 bis 2000 nm besitzt.

Geeignete Vinylester sind solche von Carbonsäuren mit 1 bis 12 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat. Die genannten Vinylester werden im allgemeinen in einer Menge von 30 bis 90 Gew.-%, bezogen auf das Gesamtgewicht der Monomere, copolymerisiert.

Ethylen wird im allgemeinen in einer Menge von 1 bis 40 Gew.-%, bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure, wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Comonomergemische von Vinylacetat mit 1 bis 40 Gew.-%, Ethylen; sowie
Comonomermischungen von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Gemische von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
sowie Gemische mit Vinylacetat, 1 bis 40 Gew.-% Ethylen und 1 bis 30 Gew.-% Vinylchlorid; wobei
die Gemische noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, daß im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Der Druck beträgt im allgemeinen 5 bis 100 bar. Die Initiierung der Polymerisation erfolgt mit den für die Emulsionspolymerisation und Suspensionspolymerisation gebräuchlichen wasserlöslichen oder monomerlöslichen Initiatoren oder Redox-Initiator-Kombinationen. Beispiele für geeignete wasserlösliche Initiatoren sind die Natrium-, Kaliumund Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Bevorzugt werden die Natrium-, Kalium- und Ammoniumsalze der Peroxodischwefelsäure und Wasserstoffperoxid. Geeignete monomerlösliche Initiatoren sind Dicetylperoxydicarbonat, Dicyclohexylperoxydicarbonat und Dibenzoylperoxid. Die genannten Initiatoren werden im allgemeinen in einer Menge von 0.01 bis 0.5 Gew.-%, bezogen auf das Gesamtgewicht der Monomere, eingesetzt.

Als Redoxinitiatoren verwendet man Kombinationen aus den genannten Initiatoren und Reduktionsmittel. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso)-Ascorbinsäure. Bevorzugt werden Natriumhydroxymethansulfinat und (Iso-)Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte Polyvinylalkohole mit einem Hydrolysegrad von 80 bis 95 Mol-% und einer Höpplerviskosität in 4 %-iger wässriger Lösung von 3 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol-% und einer Höpplerviskosität in 4 %-iger wässriger Lösung von 3 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd, erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 3 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich. Die Polyvinylalkohole werden im allgemeinen in einer Menge von insgesamt 1 bis 20 Gew.-%, bezogen auf das Gesamtgewicht der Monomere, bei der Polymerisation zugesetzt. Bei dem erfindungsgemäßen Verfahren wird ohne Zusatz von Emulgatoren polymerisiert. Der Schutzkolloid-Anteil kann sowohl vollständig vorgelegt, als auch teilweise vorgelegt und teilweise zudosiert werden. Vorzugsweise werden mindestens 2 Gew.-% des Schutzkolloids vorgelegt, am meisten bevorzugt wird der Schutzkolloid-Anteil vollständig vorgelegt.

Die Monomere können insgesamt vorgelegt werden, insgesamt zudosiert werden oder in Anteilen vorgelegt werden, und der Rest nach der Initiierung der Polymerisation zudosiert werden. Vorzugsweise wird so vorgegangen, daß 20 bis 50 Gew.-%, bezogen auf das Gesamtgewicht der Monomere, vorgelegt wird und der Rest zudosiert wird. Die Dosierungen können separat (räumlich und zeitlich) durchgeführt werden, oder die zu dosierenden Komponenten alle oder teilweise voremulgiert dosiert werden.

Die Hilfsmonomeren können abhängig von ihrer chemischen Natur ebenfalls vollständig vorgelegt oder dosiert werden. Auch teilweise Vorlage oder Dosierung ist möglich. Vorzugsweise werden die Hilfsmonomere in Abhängkeit ihrer Copolymerisationsparameter dosiert oder vorgelegt. Der Monomerumsatz wird mit der Initiatordosierung gesteuert. Die Initiatoren werden bevorzugt insgesamt zudosiert.

Erfindungswesentlich ist die Verwendung eines Saatlatex. Der Saatlatex wird in einer Menge von 2 bis 15 Gew.-%, (Festanteil s/s), bezogen auf die eingesetzte Vinylestermenge verwendet. Erfindungswesentlich ist außerdem, daß der Saatlatex nicht vollständig in die Vorlage gegeben wird, sondern zum Teil dosiert wird. Bevorzugt werden 30 bis 75 Gew.-% der Polyvinylalkohol-Gesamtmenge vorgelegt. Die restlichen 25 bis 70 Gew.-% werden im Laufe der Polymerisation zugeführt.

Als Saatdispersion können alle üblichen mit Polyvinylalkohol verträglichen Homo- oder Copolymere von ethylenisch ungesättigten Monomeren, in Form deren wässrigen Dispersionen dienen, ungeachtet der Monomerzusammensetzung und der Stabilisierung. Bevorzugt werden mit Polyvinylalkohol stabilisierte, wässrige Dispersionen von Vinylacetat-Homo- und -Copolymerisaten, insbesondere Vinylacetat-Ethylen-Copolymerisate. Beispiele hierfür sind Vinylacetatpolymerisate und Vinylacetat-Ethylen-Copolymere mit 1 bis 40 Gew.-% Ethylenanteil, welche gegebenenfalls noch weitere Comonomere aus der Gruppe enthaltend Vinylester, (Meth(Meth)acrylsäureester, Vinylchlorid sowie die weiter obengenannten Hilfsmonomere, jeweils in den obengenannten Mengen, enthalten können. Die bevorzugte Teilchengrößen der Saatdispersion beträgt 200 bis 2000 nm, besonders bevorzugt 500 bis 1500 nm (jeweils Gewichtsmittel Dw). Der Festgehalt beträgt bevorzugt 50 bis 65 %, besonders bevorzugt 55 bis 60 %. Die Viskosität der Saatdispersion liegt bevorzugt im Bereich < 3000 mPas (Brookfield, 20 U).

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von > 60 Gew.-%, vorzugsweise > 65 Gew.-%, besonders bevorzugt > 70 Gew.-%. Die Viskosität der erfindungsgemäßen Dispersionen beträgt bevorzugt < 10000 mPas, besonders bevorzugt < 5000 mPas. Die Dispersionen zeichnen sich außerdem vorteilhaft durch ein geringes thixotropes Verhalten aus, das heißt durch eine geringe Abhängigkeit der Viskosität von der Schubspannung.

Die mit dem erfindungsgemäßen Verfahren erhältlichen wässrigen Dispersionen können gegebenenfalls zur Herstellung von in Wasser redispergierbaren Polymerpulvern eingesetzt werden. Dazu werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet.

Die wässrigen Polymerdispersionen und die daraus erhältlichen Pulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- und Bindemittel für Textilien und Papier oder Holz.

Die nachfolgenden Beispiele dienen der weiteren Erläuterung der Erfindung:
Als Saatdispersion wurde in den Beispielen eine wässrige Dispersion eines Copolymers mit 85 Gew.-% Vinylacetat und 15 Gew.-% Ethylen verwendet. Die Dispersion wurde mittels 8 Gew.-%, bezogen auf das Copolymergewicht, eines Polyvinylalkohols mit einem Hydrolysegrad von 88 Mol-% und einer Viskosität nach Höppler von 4 mPas stabilisiert. Die Dispersion hatte einen Festgehalt von 55 %, eine Viskosität nach Brookfield (20 Upm) von 600 mPas und eine mittlere Teilchengröße (Gewichtsmittel Dw) von 900 nm.

### Beispiel 1:

In einen 600 Liter Autoklaven wurden 61 kg deionisiertes Wasser, 23 kg einer 20 %-igen Lösung eines Polyvinylalkohols mit einem Hydrolysegrad von 88 Mol-% und einer Viskosität nach Höppler von 4 mPas, 22.5 kg Saatdispersion sowie 112 kg Vinylacetat vorgelegt. Der pH-Wert wurde mit Ameisensäure auf 4.0 eingestellt und der Autoklav evakuiert. Anschließend wurden bei 75°C 28 bar Ethylen aufgedrückt, was einer Ethylenmenge von 20 kg entsprach.
Zum Starten der Polymerisation wurden die Initiatordosierungen, eine 3 %-ige wässrige Lösung von tert.-Butylhydroperoxid und eine 5 %-ige wässrige Lösung von Ascorbinsäure, mit je 1200 g/h dosiert. Die Innentemperatur wurde durch externe Kühlung auf 75°C begrenzt. 5 Minuten nach Reaktionsbeginn wurde mit der Dosierung von Vinylacetat und einer Voremulsion bestehend aus 24 kg Wasser, 46 kg einer 20 %-igen Lösung eines Polyvinylalkohols mit einem Hydrolysegrad von 88 Mol-% und einer Viskosität nach Höppler von 4 mPas und 14 kg Saatlatex begonnen. 225 kg Vinylacetat wurden mit einer Rate von 90 kg /h dosiert; 84 kg Voremulsion wurden mit einer Rate von 33.5 kg/h dosiert. Ethylen wurde bis zu einer Menge von 40 kg bei 44 bar nachdosiert. Nach Beendigung der Reaktion wurde gekühlt, überschüssiges Ethylen entspannt und das Polymerisat zur Entfernung von Restmonomer nachpolymerisiert. Zur Nachpolymerisation werden nacheinander 1100 g einer 10 %-igen wässrigen Lösung von tert.-Butylhydroperoxid und 2200 g einer 5 %-igen wässrigen Lösung von Ascorbinsäure zugegeben. Anschließend wurde die Dispersion über ein 500 µm Sieb abgefüllt.
Es wurde eine Dispersion mit folgenden Kenndaten erhalten:

| | |
|---|---|
| Feststoffgehalt FG | 71.5 % |
| Viskosität BF20 (Brookfield 20U) | 6500 mPas |
| pH | 4.2 |
| Teilchengröße Dw (Gewichtsmittel) | 2390 nm |
| Teilchengröße Dn (Zahlenmittel) | 120 nm |
| Siebrückstand SR (70 µm) | 520 ppm |
| Absitz RA | 0.1/0.8 |

### Beispiel 2:

Analog der Vorgehensweise in Beispiel 1 wurde eine Dispersion hergestellt, mit dem Unterschied, daß 15 kg der Saatdispersion vorgelegt wurden und 21.5 kg dosiert wurden.
Die Analysedaten sind in Tabelle 1 angegeben.

### Beispiel 3:

Analog der Vorgehensweise in Beispiel 1 wurde eine Dispersion hergestellt, mit dem Unterschied, daß 25.5 kg der Saatdispersion vorgelegt wurden und 11 kg dosiert wurden.
Die Analysedaten sind in Tabelle 1 angegeben.

### Vergleichsbeispiel 4:

Analog der Vorgehensweise in Beispiel 1 wurde eine Dispersion hergestellt, mit dem Unterschied, daß 30 kg der Saatdispersion vorgelegt wurden und 6.5 kg dosiert wurden. Die Analysedaten sind in Tabelle 1 angegeben.

### Vergleichsbeispiel 5:

Analog der Vorgehensweise in Beispiel 1 wurde eine Dispersion hergestellt, mit dem Unterschied, daß die Saatdispersion insgesamt (36.5 kg) vorgelegt wurde.
Die Analysedaten sind in Tabelle 1 angegeben.

### Beispiel 6:

Analog der Vorgehensweise in Beispiel 1 wurde eine Dispersion hergestellt, mit dem Unterschied, daß 28 kg der Saatdispersion vorgelegt wurden und 18 kg dosiert wurden, wobei nur 55 kg Wasser in der Vorlage verwendet worden sind.
Die Analysedaten sind in Tabelle 1 angegeben.

### Beispiel 7:

Analog der Vorgehensweise in Beispiel 1 wurde eine Dispersion hergestellt, mit dem Unterschied, daß 37 kg der Saatdispersion vorgelegt wurden und 24 kg dosiert wurden, wobei nur 50 kg Wasser in der Vorlage verwendet worden sind.
Die Analysedaten sind in Tabelle 1 angegeben.

### Beispiel 8:

Analog der Vorgehensweise in Beispiel 1 wurde eine Dispersion hergestellt, mit dem Unterschied, daß als Polyvinylalkohol eine 20 %-ige Lösung eines Polyvinylalkohols mit einem Hydrolysegrad von 88 Mol-% und einer Viskosität nach Höppler von 3.5 mPas eingesetzt wurde.
Die Analysedaten sind in Tabelle 1 angegeben.

### Beispiel 9:

Analog der Vorgehensweise in Beispiel 1 wurde eine Dispersion hergestellt, mit dem Unterschied, daß als Polyvinylalkohol eine Mischung aus 75 Gew.-Teile einer 20 %-igen Lösung eines Polyvinylalkohols mit einem Hydrolysegrad von 88 Mol-% und einer Viskosität nach Höppler von 3.5 mPas und aus 25 Gew.-Teile einer 20 %-igen Lösung eines Polyvinylalkohols mit einem Hydrolysegrad von 88 Mol-% und einer Viskosität nach Höppler von 4.0 mPas eingesetzt wurde.
Die Analysedaten sind in Tabelle 1 angegeben.

### Beispiel 10:

Analog der Vorgehensweise in Beispiel 1 wurde eine Dispersion hergestellt, mit dem Unterschied, daß als Polyvinylalkohol eine 20 %-ige Lösung eines Polyvinylalkohols mit einem Hydrolysegrad von 88 Mol-% und einer Viskosität nach Höppler von 2.5 mPas eingesetzt wurde.
Die Analysedaten sind in Tabelle 1 angegeben.

### Pulverherstellung:

Die Dispersionen aus den Beispielen 1 bis 3 und 6 bis 9 wurden mit 10 Gew.-% (fest/fest) Polyvinylalkohol mit einem Hydrolysegrad von 88 Mol % und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Bestimmung des Siebrückstandes SR:

Der Siebrückstand der Dispersionen wurden durch Sieben über ein Sieb mit Maschenweite 70 um bestimmt. Die Angabe erfolgt in mg Rückstand pro kg eingesetzter Dispersion (mg/kg = ppm).

### Bestimmung des Absitzverhaltens RA:

Das Absitzverhalten wurde mit verdünnten Dispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach einer Stunde und nach 24 Stunden.

### Bestimmung des Redispergierverhaltens R:

Aus den Verdüsungsdispersionen der genannten Beispielen (incl. Sprühtrocknungsschutzkolloid) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe solange an der gleichen Stelle verrieben, bis die Glasplatte an dieser Stelle filmfrei war, der Film in Filmstücke zerfiel oder vollständig erhalten blieb.
Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

### Bestimmung der Blockfestigkeit B:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 =: sehr gute Blockstabilität
- 2 =: gute Blockstabilität
- 3 =: befriedigende Blockstabilität
- 4 =: nicht blockstabil, Pulver nach Zerdrücken nicht mehr rieselfähig.

### Bestimmung der Zementstabilität ZS:

Es wurde eine Zementmischung der nachfolgenden Rezeptur angerührt:

| | |
|---|---|
| Portlandzement | 82.5 g |
| Calcit (CaCO₃)10-40 mm | 75 g |
| Quarzsand 200-500 mm | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

Die erfindungsgemäßen Produkte zeigen niedrige Viskositäten bei guter Stabilität. Die Vergleichsbeispiele zeigen deutlich höhere Viskositäten bzw. Stabilitätsdefizite. Von den Vergleichsbeispielen wurden daher keine Pulver hergestellt.
Die erfindungsgemäßen Vorgehensweise führte durchweg zu gut redispergierbaren und zementstabilen Dispersionen oder Pulvern; die Pulver zeigten gute Block- und somit Lagerstabilitäten.

**Tabelle 1:**

| Bsp. | FG | pH | BF20 | Dw | Dn | SR | RA | R | B | ZS |
|---|---|---|---|---|---|---|---|---|---|---|
| | % | | mPas | nm | nm | ppm | mm | | | |
| Bsp. 1 | 71.5 | 4.2 | 6500 | 2390 | 120 | 520 | 0.1/0.8 | 1 | 1 | ja |
| Bsp. 2 | 70.6 | 4.1 | 4600 | 2400 | 130 | 460 | 0.1/0.7 | 1 | 1 | ja |
| Bsp. 3 | 71.1 | 4.3 | 4900 | 2200 | 140 | 420 | 0.0/0.5 | 1 | 1 | ja |
| V.Bsp. 4 | 70.4 | 4.1 | 10600 | 2600 | 1800 | 590 | 0.2/1.4 | | | |
| V.Bsp. 5 | 68.5 | 4.0 | 15800 | 3200 | 2200 | 660 | 0.3/1.8 | | | |
| Bsp. 6 | 69.6 | 4.2 | 3500 | 2300 | 135 | 530 | 0.1/0.8 | 1 | 1 | ja |
| Bsp. 7 | 70.2 | 4.1 | 2900 | 2100 | 155 | 480 | 0.1/0.9 | 1 | 1 | ja |
| Bsp. 8 | 71.8 | 4.3 | 4500 | 2250 | 140 | 500 | 0.1/0.8 | 1 | 1 | ja |
| Bsp. 9 | 70.7 | 4.1 | 4800 | 2400 | 130 | 450 | 0.0/0.7 | 1 | 1 | ja |
| Bsp. 10 | 68.5 | 4.1 | 3900* | 5400 | 120 | 890 | 0.3/1.5 | | | |

| | | | | | | | | | | |
|---|---|---|---|---|---|---|---|---|---|---|
| *dilatant | | | | | | | | | | |

## Patentansprüche

1. Verfahren zur Herstellung von Copolymerisaten auf Basis von Vinylestern und Ethylen sowie gegebenenfalls weiteren Comonomeren, in Form deren wässrigen Dispersionen, mit einem Feststoffgehalt > 65 % und einer Viskosität nach Brookfield von < 10000 mPas, mittels radikalisch initiierter Polymerisation von einem oder mehreren Monomeren aus der Gruppe der Vinylester und Ethylen und gegebenenfalls weiteren damit copolymerisierbaren Monomeren, in Gegenwart von einem oder mehreren Schutzkolloiden, wobei die Polymerisation in Gegenwart von 2 bis 15 Gew.-% Saatlatex, bezogen auf die Vinylestermenge, durchgeführt wird,
**dadurch gekennzeichnet, daß**
a) ohne Zusatz von Emulgator und in Gegenwart von einem oder mehreren Schutzkolloiden aus der Gruppe der Polyvinylalkohole mit einem Hydrolysegrad von 80 bis 95 Mol-% und einer Höppler-Viskosität in 4 %-iger wässriger Lösung von 3 bis 30 mPas polymerisiert wird, und
b) der Saatlatex in einem Anteil von 30 bis 75 Gew.-% vor Beginn der Polymerisation vorgelegt wird und der Rest während der Polymerisation zudosiert wird, wobei der Saatlatex eine mittlere Teilchengröße (Gewichtsmittel Dw) von 200 bis 2000 nm besitzt.

2. Verfahren gemäß Anspruch 1, **dadurch gekennzeichnet, daß** ein oder mehrere Vinylester von Carbonsäuren mit 1 bis 12 C-Atomen in einer Menge von 30 bis 90 Gew.-% Ethylen in einer Menge von 1 bis 40 Gew.-%, jeweils bezogen auf das Gesamtgewicht der Monomere, gegebenenfalls mit einem oder mehreren weiteren Comonomeren aus der Gruppe umfassend Ester der Acrylsäure oder Methacrylsäure, der Vinylhalogenide oder der Olefine copolymerisiert werden.

3. Verfahren nach Anspruch 1 bis 2, **dadurch gekennzeichnet, daß** Comonomergemische von Vinylacetat mit 1 bis 40 Gew.-%, Ethylen; oder
Comonomermischungen von Vinylacetat mit 1 bis 40 Gew.-%, Ethylen und 1 bis 50 Gew.-% von einem oder mehreren weiteren Comonomeren aus der Gruppe der Vinylester mit 1 bis 12 C-Atomen im Carbonsäurerest; oder
Gemische von Vinylacetat, 1 bis 40 Gew.-% Ethylen und 1 bis 60 Gew.-% Acrylsäureester von unverzweigten oder verzweigten Alkoholen mit 1 bis 15 C-Atomen; oder
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, welche noch 1 bis 40 Gew.-% Ethylen enthalten; oder
Gemische mit Vinylacetat, 1 bis 40 Gew.-% Ethylen und 1 bis 30 Gew.-% Vinylchlorid copolymerisiert werden,
wobei die Gemische noch Hilfsmonomere enthalten können, und sich die Angaben in Gew.-% auf jeweils 100 Gew.-% aufaddieren.

4. Verfahren nach Anspruch 1 bis 3, **dadurch gekennzeichnet, daß** als Schutzkolloide ein oder mehrere aus der Gruppe der teilverseiften Polyvinylalkohole mit einem Hydrolysegrad von 85 bis 94 Mol-% und einer Höpplerviskosität in 4 %iger wässriger Lösung von 3 bis 15 mPas eingesetzt werden.

5. Verfahren nach Anspruch 1 bis 4, **dadurch gekennzeichnet, daß** als Saatlatex mit Polyvinylalkohol stabilisierte wässrige Dispersionen von Vinylacetat-Homo- und -Copolymerisaten eingesetzt werden.

6. Verwendung der Verfahrensprodukte nach Anspruch 1 bis 5, zur Herstellung von in Wasser redispergierbaren Polymerpulvern mittels Sprühtrocknung, gegebenenfalls nach Zugabe weiterer Schutzkolloide als Verdüsungshilfe.

7. Verwendung der Verfahrensprodukte gemäß Anspruch 1 bis 5 als Rezepturbestandteil, gegebenenfalls in Verbindung mit anorganischen, hydraulisch abbindenden Bindemitteln in Bauklebern, Putzen, Spachtelmassen, Fußbodenspachtelmassen, Verlaufsmassen, Dichtschlämmen, Fugenmörtel und Farben.

8. Verwendung der Verfahrensprodukte gemäß Anspruch 1 bis 5 als Bindemittel für Beschichtungsmittel, Farben und Klebemittel.

9. Verwendung der Verfahrensprodukte gemäß Anspruch 1 bis 5 als Beschichtungs- und Bindemittel für Textilien und Papier.

10. Verwendung gemäß Anspruch 7 in Fliesenkleber und Vollwärmeschutzkleber.

## Claims

1. Process for preparing copolymers based on vinyl ester and ethylene and, if desired, further comonomers, in the form of their aqueous dispersions, having a solids content of > 65% and a Brookfield viscosity of < 10 000 mPas by means of free-radically initiated polymerization of one or more monomers from the group of the vinyl esters and ethylene and, if desired, further monomers copolymerizable therewith in the presence of one or more protective colloids, polymerization being conducted in the presence of from 2 to 15% by weight of seed latex, based on the amount of vinyl ester,
**characterised in that** it comprises
a) carrying out polymerization without adding emulsifier and in the presence of one or more protective colloids from the group of the polyvinyl alcohols having a degree of hydrolysis of from 80 to 95 mol% and a Höppler viscosity in 4% strength aqueous solution of from 3 to 30 mPas, and
b) introducing the seed latex in a fraction of from 30 to 75% by weight before beginning the polymerization and metering in the remainder during the polymerization, the seed latex presenting an average particle size (weight average Dw) of from 200 to 2 000 nm.

2. Process according to Claim 1, **characterized in that** one or more vinyl esters of carboxylic acids having 1 to 12 carbon atoms are copolymerized in an amount of from 30 to 90% by weight, ethylene is copolymerized in an amount of from 1 to 40% by weight, based in each case on the overall weight of the monomers, if desired with one or more comonomers from the group containing acrylic acid or methacrylic acid esters, of the halogenides or of the olefins.

3. Process according to Claims 1 and 2, **characterized in that** comonomer mixtures of vinyl acetate with from 1 to 40% by weight of ethylene; or
comonomer mixtures of vinyl acetate with from 1 to 40% by weight of ethylene and from 1 to 50% by weight of one or more further comonomers from the group of the vinyl esters having 1 to 12 carbon atoms in the carboxylic acid radical, or
mixtures of vinyl acetate, from 1 to 40% by weight of ethylene and from 1 to 60% by weight of acrylic esters of branched or unbranched alcohols having from 1 to 15 carbon atoms, or
mixtures with from 30 to 75% by weight of vinyl acetate, from 1 to 30% by weight of vinyl laurate or vinyl esters of an α-branched carboxylic acid having 9 to 11 carbon atoms, and from 1 to 30% by weight of acrylic esters of branched or unbranched alcohols having 1 to 15 carbon atoms, which also contain from 1 to 40% by weight of ethylene, or
mixtures with vinyl acetate, from 1 to 40% by weight of ethylene and from 1 to 30% by weight of vinyl chloride are copolymerized,
the mixtures may further contain auxiliary monomers, and the amounts in % by weight add up to 100% by weight in each case.

4. Process according to Claims 1 to 3, **characterized in that** one or more protective colloids from the group of partially saponified polyvinyl alcohols having a degree of hydrolysis of from 85 to 94 mol% and a Höppler viscosity in a 4% strength aqueous solution of from 3 to 15 mPas are used.

5. Process according to Claims 1 to 4, **characterized in that** polyvinyl alcohol-stabilized aqueous dispersions of vinyl acetate homopolymers and copolymers are used as seed latex.

6. Use of the process products according to Claims 1 to 5 to prepare water-redispersible polymer powders by means of spray drying, with or without the addition of further protective colloids as spraying aids.

7. Use of the process products according to Claims 1 to 5 as formulation constituents, alone or in conjunction with inorganic, hydraulically setting binders, in building adhesives, plasters and renders, filling compounds, trowel-applied flooring compounds, levelling compounds, grouts, jointing mortars, and paints.

8. Use of the process products according to Claims 1 to 5 as binders for coating compositions, paints, and adhesives.

9. Use of the process products according to Claims 1 to 5 as coating and binding materials for textiles and paper.

10. Use according to Claim 7 in tile adhesives and adhesives for exterior insulation systems.

## Revendications

1. Procédé de préparation de copolymères à base d'esters vinyliques et d'éthylène et éventuellement d'autres comonomères, sous forme de leurs dispersions aqueuses, présentant une teneur en matières solides > 65 % et une viscosité de Brookfield < 10 000 mPas, par polymérisation amorcée par voie radicalaire d'un ou de plusieurs monomères parmi le groupe constitué des esters vinyliques et de l'éthylène et éventuellement d'autres monomères copolymérisables avec ceux-ci, en présence d'un ou de plusieurs colloïdes protecteurs, la polymérisation étant réalisée en présence de 2 à 15 % en poids de latex semence, par rapport à la quantité d'ester vinylique,
**caractérisé en ce que**
a) la polymérisation est réalisée sans ajouter d'émulsifiant et en présence d'un ou de plusieurs colloïdes protecteurs parmi le groupe constitué des alcools polyvinyliques présentant un degré d'hydrolyse de 80 à 95 % en moles et une viscosité de Höppler de 3 à 30 mPas dans une solution aqueuse à 4 %, et
b) le latex semence est introduit initialement en une proportion de 30 à 75 % en poids avant le début de la polymérisation et le reste est ajouté en quantité mesurée durant la polymérisation, le latex semence présentant une taille de particules moyenne (moyenne en poids Dw) de 200 à 2 000 nm.

2. Procédé selon la revendication 1, **caractérisé en ce que** l'on procède à la copolymérisation d'un ou de plusieurs esters vinyliques d'acides carboxyliques ayant de 1 à 12 atomes de carbone en une quantité de 30 à 90 % en poids, de l'éthylène en une quantité de 1 à 40 % en poids, dans chaque cas par rapport au poids total des monomères, éventuellement avec un ou plusieurs autres comonomères parmi le groupe constitué d'esters de l'acide acrylique ou de l'acide méthacrylique, des halogénures de vinyle ou des oléfines.

3. Procédé selon les revendications 1 à 2, **caractérisé en ce que** l'on procède à la copolymérisation de mélanges comonomères d'acétate de vinyle comprenant de 1 à 40 % en poids d'éthylène ; ou
de mélanges comonomères d'acétate de vinyle comprenant de 1 à 40 % en poids d'éthylène et de 1 à 50 % en poids d'un ou de plusieurs autres comonomères parmi le groupe constitué des esters vinyliques ayant de 1 à 12 atomes de carbone dans le radical acide carboxylique ; ou
de mélanges d'acétate de vinyle, de 1 à 40 % en poids d'éthylène et de 1 à 60 % en poids d'esters acryliques d'alcools non ramifiés ou ramifiés ayant de 1 à 15 atomes de carbone ; ou
de mélanges comprenant de 30 à 75 % en poids d'acétate de vinyle, de 1 à 30 % en poids de laurate de vinyle ou d'esters vinyliques d'un acide carboxylique ramifié en alpha ayant de 9 à 11 atomes de carbone, ainsi que de 1 à 30 % en poids d'esters acryliques d'alcools non ramifiés ou ramifiés ayant de 1 à 15 atomes de carbone, qui renferment également de 1 à 40 % en poids d'éthylène ; ou
de mélanges comprenant de l'acétate de vinyle, de 1 à 40 % en poids d'éthylène et de 1 à 30 % en poids de chlorure de vinyle,
les mélanges pouvant également comprendre des monomères auxiliaires, et la somme des données en % en poids étant dans chaque cas de 100 % en poids.

4. Procédé selon les revendications 1 à 3, **caractérisé en ce que** l'on utilise, en tant que colloïdes protecteurs, un ou plusieurs parmi le groupe constitué des alcools polyvinyliques partiellement saponifiés présentant un degré d'hydrolyse de 85 à 94 % en moles et une viscosité de Höppler de 3 à 15 mPas dans une solution aqueuse à 4 %.

5. Procédé selon les revendications 1 à 4, **caractérisé en ce que** l'on utilise, en tant que latex semence, des dispersions aqueuses d'homopolymères et de copolymères d'acétate de vinyle stabilisées avec un alcool polyvinylique.

6. Utilisation des produits du procédé selon les revendications 1 à 5, pour la préparation de poudres polymères redispersables dans l'eau par séchage par pulvérisation, éventuellement après addition d'autres colloïdes protecteurs en tant qu'auxiliaires d'atomisation.

7. Utilisation des produits du procédé selon les revendications 1 à 5 en tant que constituant de formulation, éventuellement en association avec des liants inorganiques à prise hydraulique dans des adhésifs de construction, des crépis, des mastics, des mastics pour planchers, des compositions d'égalisation, des coulis d'étanchéité, des mortiers de joints et des peintures.

8. Utilisation des produits du procédé selon les revendications 1 à 5 en tant que liants, pour des compositions de revêtement, des peintures et des adhésifs.

9. Utilisation des produits du procédé selon les revendications 1 à 5 en tant que compositions de revêtement et liants pour des textiles et du papier.

10. Utilisation selon la revendication 7 dans des colles pour carrelage et des colles d'isolation thermique totale.
